# EUROPÄISCHE PATENTSCHRIFT

(11) **EP 1 843 932 B1**
(45) Veröffentlichungstag und Bekanntmachung des Hinweises auf die Patenterteilung: **06.04.2011**
(21) Anmeldenummer: 06705918.8
(22) Anmeldetag: 06.02.2006
(51) Int. Cl.: B62D 5/00, B62D 1/10

(54) **LENKUNG MIT AIRBAGANORDNUNG SOWIE BETRIEBSVERFAHREN DAFÜR**
STEERING MECHANISM WITH AN AIRBAG ARRANGEMENT AND OPERATIONAL METHOD THEREFOR
DIRECTION DOTEE D'UN DISPOSITIF DE COUSSIN GONFLABLE ET MODE DE FONCTIONNEMENT ASSOCIE

(30) Priorität: 04.02.2005 DE 202005001907 U
(43) Veröffentlichungstag der Anmeldung: 17.10.2007
(73) Patentinhaber: ThyssenKrupp Presta Aktiengesellschaft, 9492 Eschen (LI)
(72) Erfinder: MÜLLER, Helmut, 65428 Rüsselsheimverstorben (DE)
(74) Vertreter: Seeger · Seeger · Lindner Partnerschaft Patentanwälte
(86) Internationale Anmeldenummer: PCT/DE2006/000190
(87) Internationale Veröffentlichungsnummer: WO 2006/081813

(56) Entgegenhaltungen:
- EP-A1- 0 317 390
- EP-A1- 0 825 089
- WO-A1-03/066414
- WO-A1-2006/081813
- DE-C1- 10 020 085
- US-A- 4 751 976
- US-A1- 2004 154 422
- PATENT ABSTRACTS OF JAPAN Bd. 012, Nr. 067 (M-673), 2. März 1988 (1988-03-02) -& JP 62 214059 A (FUJI HEAVY IND LTD), 19. September 1987 (1987-09-19)
- PATENT ABSTRACTS OF JAPAN Bd. 2000, Nr. 15, 6. April 2001 (2001-04-06) -& JP 2000 344116 A (NISSAN MOTOR CO LTD), 12. Dezember 2000 (2000-12-12)
- PATENT ABSTRACTS OF JAPAN Bd. 2000, Nr. 17, 5. Juni 2001 (2001-06-05) -& JP 02 147450 A (OKI T JACK), 6. Juni 1990 (1990-06-06)

## Beschreibung

Die Erfindung betrifft eine Lenkung mit einer Airbaganordnung sowie ein Betriebsverfahren dafür. Insbesondere befasst sich die Erfindung mit einem sich nicht drehenden Fahrerairbag in einem Lenkrad in einem Automobil.

Heute drehen sich in der Praxis Fahrerairbags mit dem Lenkrad. Das hat zwei Nachteile. Einmal muss der Airbag "rund" sein, da man nicht weiß, in welcher Stellung des Lenkrades ein Unfall passiert. Weiter ist es notwendig, dass die Stromversorgung zur eigentlichen Airbagvorrichtung üblicherweise mittels einer teuren sogenannten "Wickelfeder" übertragen wird. Letzteres gilt auch für die Anbindung von Schaltern für die heute in der Praxis üblichen "Multifunktionslenkräder". An diesem Thema wird bereits gearbeitet, wie beispielsweise Veröffentlichungen der Firmen Autoliv, TRW, Faurecia, ZF, Takata u.a zeigen.

In der Offenlegungsschrift DE 21 31 902 vom 26. Juni 1971 wird bereits ein sich nicht drehender Airbag gezeigt. Hier ist im Lenkrad ein "Planetrad" montiert, dessen "Sonnenrad" im oberen Ende der Lenkspindel befestigt ist. Eine weitere Alternative ist die Kraftübertragung zwischen dem Zahnrad am Ende der Lenkspindel und dem "Sonnenrad" im Lenkrad mittels drei "Planetenrädern". Nachteil solcher Ausgestaltungen ist das Gewicht des Getriebes im Lenkrad, was wegen unliebsamer Schwingungen besonders bei Autos mit Dieselmotoren ungeeignet ist. Nachteilig ist weiter die Drehung der Lenkspindel mit doppelt bis dreifach höherer Geschwindigkeit und die umgekehrte Drehrichtung der Lenkspindel. Komplett neue Lenkgetriebe an der Vorderachse und andere Angriffshebel sind erforderlich.

Weiter ist der Stand der Technik für eine "stehende" Kabeldurchführung in der DE 21 31 902 zur Bedienung von Schaltern gezeigt. Hier ist die Lenkwelle geteilt und versetzt und mittels Zahnrädern verbunden.

Ferner gibt es in der deutschen Patentschrift 872011 vom 8. Juli 1949 eine im Lenkrad sich nicht drehende Uhr mittels Planetengetriebe.

Weiter gibt es beispielsweise nter den Marken BMW und ZF eine Lenksäule, die mittels dreier Planetenradsätzen laufend in einem oberen und unteren Sonnenrad die Lenkungsübersetzung entsprechend der Geschwindigkeit variiert. Hierzu wird das Gehäuse in dem die 3 Planetenradsätze gelagert sind mittels eines elektronisch gesteuerten Stellmotors verdreht. Vorteil ist ein stabiles Fahrverhalten bei höherer Geschwindigkeit und Einparken mit wenigen Lenkradwinkelgraden Umdrehung.

Darüber hinaus ist ein schrägverzahntes Überlagerungsgetriebe an der WO-03/066414 bekannt.

Die vorliegende Erfindung hat und erreicht das Ziel, die bestehende Technik zu verbessern.

Durch die vorliegende Erfindung werden eine Lenkung mit einer Airbaganordnung sowie ein Betrieb

sverfahren dafür geschaffen, wobei ein sich bei Lenkraddrehung nicht mitdrehender Fahrerairbag mit einer fahrgeschwindigkeitsabhängigen Lenkbetätigungssteuerung kombiniert ist. In anderen Worten schafft die Erfindung einen stehenden Fahrerairbag kombiniert mit einer variablen Lenkungsübersetzung.

Stehender Fahrerairbag heißt, ganz gleich wie sich das Lenkrad dreht, der Fahrerbag bleibt immer stehen mittels eines Planetengetriebes, das die Lenkraddrehung entgegengesetzt in eine Gegendrehung des Fahrerairbags versetzt, sodass dieser subjektiv zum Fahrer stehen bleibt. Das hat den Vorteil, dass der Airbag besser angepasst werden kann. Er kann z.B. den Insassen besser seitlich umschließen und besser die A-Säule abdecken.

Eine vorteilhafte weitere Ausgestaltung besteht darin, dass die Lenkbetätigungssteuerung eine veränderbare Übersetzung enthält, die insbesondere nur vier Zahnräder enthält. Damit kann insbesondere ein integrierter, ineinander greifender Aufbau mit einem Stellgetriebe mit lediglich vier ineinander kämmenden Zahnrädern realisiert werden.

Hierzu wird die Lenksäule vorzugsweise mittels eines Planetenradsatzes unterbrochen, dessen Achse insbesondere mittels eines Stellmotors geschwindigkeitsabhängig verdreht werden kann und damit eine Über- oder Untersetzung der Lenkraddrehung zur Drehung der unteren Gewindespindel zum Lenkgetriebe erzeugt. Durch Schrägstellung der Planetenradachse werden hierzu nur vier Räder benötigt. Es ist zwischen den Verzahnungen so viel Raum, dass das Standrohr nach außen geführt werden kann und der Airbag und die Funktionsschalter hierdurch bei Lenkraddrehung stehen bleiben.

Weiterhin kann mit Vorteil eine Lenksäule mit einer geschwindigkeitsabhängigen und insbesondere computergesteuerten Übersetzungsänderung mit "stehendem", sich bei Lenkraddrehung nicht drehenden Fahrerairbag und dazu "stehenden" Multifunktionsschaltern vorgesehen sein.

Noch eine weitere vorteilhafte Bauform ist dadurch gekennzeichnet, dass die Planetenradachse schräg gestellt ist.

Ferner können entsprechende Versionen gemäß den vorstehenden erläuterungen dadurch weitergebildet sein, dass zwischen den Verzahnungen so viel Raum ist, dass das Standrohr nach außen geführt werden kann und der Airbag und die Funktionsschalter hierdurch bei Lenkraddrehung stehen bleiben.

Bei einer erfindungsgemäßen Lenkung kann ferner mit Vorteil vorgesehen sein, dass eine Lenksäule mit einer geschwindigkeitsabhängigen und insbesondere computergesteuerten Übersetzungsänderung mit "stehendem", sich bei Lenkraddrehung nicht drehenden Fahrerairbag und vorzugsweise dazu "stehenden" Multifunktionsschaltern vorgesehen ist. Alternativ oder zusätzlich kann in vorteilhafter Weise vorgesehen sein, dass sich ein sich nicht mit der Lenkraddrehung drehender und damit stehender Fahrerairbag einfachst installieren läßt.

Die Erfindung schafft auch ein Betriebsverfahren für eine Lenkung mit einer Airbaganordnung, insbesondere wie sie vorstehend in Grund- und Weiterbildungsvarianten beschrieben und erläutert wurde, wobei sich ein Fahrerairbag bei Lenkraddrehung nicht mitdreht und eine fahrgeschwindigkeitsabhängige Lenkbetätigungssteuerung in Kombination erfolgt.

Bei einem weiteren Betriebsverfahren gemäß der Erfindung für eine Lenkung mit einer Airbaganordnung, insbesondere wie sie vorstehend in Grund- und Weiterbildungsvarianten beschrieben und erläutert wurde, ist ferner vorgesehen, dass sich ein Fahrerairbag bei Lenkraddrehung nicht mitdreht und eine Lenkungsübersetzung variabel erfolgt.

Weitere bevorzugte und/oder vorteilhafte Ausgestaltungen der Erfindung ergeben sich aus den Ansprüchen und deren Kombinationen sowie den gesamten vorliegenden Anmeldungsunterlagen.

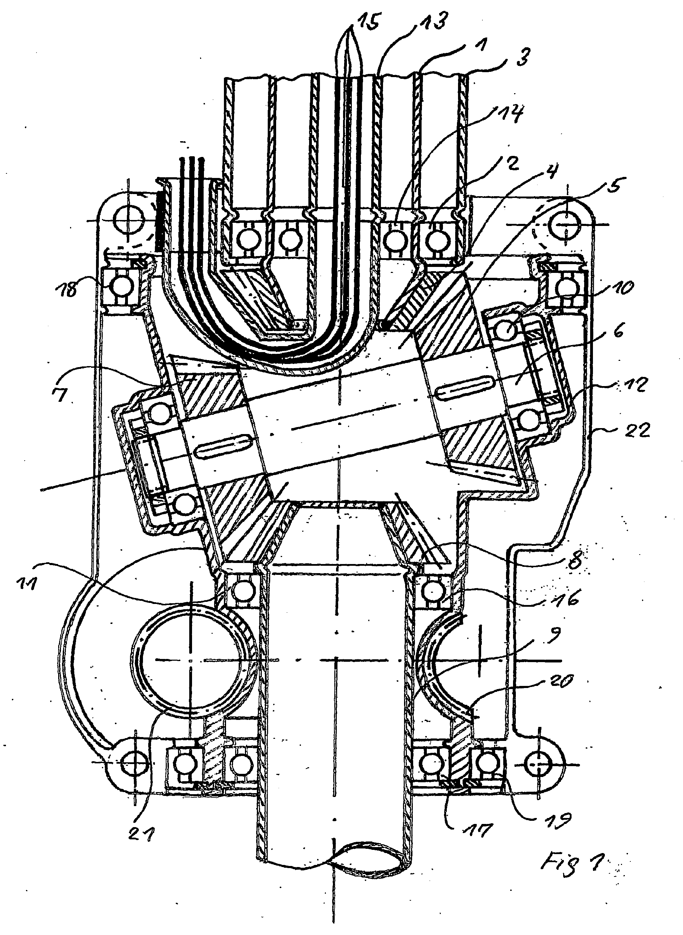

Die Erfindung wird anhand von Ausführungsbeispielen nachfolgend unter Bezugnahme auf die Zeichnungen näher erläutert, in der
- Fig. 1: eine schematische geschnittene Ausschnittdarstellung eines Ausführungsbeispiels einer Lenkung zeigt.

Anhand der nachfolgend beschriebenen und in der Zeichnung dargestellten Ausführungs- und Anwendungsbeispiele wird die Erfindung lediglich exemplarisch näher erläutert. Verfahrens- und Vorrichtungsmerkmale ergeben sich jeweils analog auch aus Vorrichtungs- bzw. Verfahrensbeschreibungen.

Anhand der Darstellungen in der Zeichnung werden auch solche Merkmale deutlich, die nicht mit Bezugszeichen versehen sind, unabhängig davon, ob solche Merkmale nachfolgend beschrieben sind oder nicht. Andererseits sind auch Merkmale, die in der vorliegenden Beschreibung enthalten, aber nicht in der Zeichnung sichtbar oder dargestellt sind, ohne weiteres für einen Fachmann verständlich.

Einzelne Merkmale, die im Zusammenhang mit dem konkreten Ausführungsbeispiel angeben und/oder dargestellt sind, sind nicht auf dieses Ausführungsbeispiel oder die Kombination mit den übrigen Merkmalen dieses Ausführungsbeispiels beschränkt, sondern können im Rahmen des technisch Möglichen, mit jeglichen anderen Varianten, auch wenn sie in den vorliegenden Unterlagen nicht gesondert behandelt sind, kombiniert werden.

Die Fig. 1 zeigt in einem ersten Ausführungsbeispiel eine Lenkspindel 1, die mit einem unteren Lager 2 in einem Lenkspindelgehäuse 3 glagert ist. An der Lenkspindel 1 ist am unteren Ende ein oberes Lenksäulenzahnrad 4 angebracht. Dieses Lenksäulenzahnrad 4 kämmt in einem Treiberplantetenrad 5, das auf einer Planetenradachse 6 befestigt ist. Diese Planetenradachse 6 trägt auf der Gegenseite zum Treiberplantetenrad 5 ein Getriebeplanetenrad 7. Dieses Getriebeplanetenrad 7 kämmt seinerseits in einem getriebenen Tellerrad 8, das an einer unteren Lenkspindel 9 befestigt ist.

Die Planetenradachse 6 ist derart schräg über Planetensatzlager 10 und 11 in einem Planetenradgehäuse 12 gelagert, dass sich das Treiberplanetenrad 5 und das Getriebeplanetenrad 7 frei drehen lassen und genügend Raum für ein abgeköpftes Standrohr 13 für eine Airbag (nicht gezeigt) vorhanden ist. Das Standrohr 13 trägt den Airbag (nicht gezeigt) und insbesondere auch Multifunktionsschalter (nicht gezeigt). Das Standrohr 13 ist in einem unteren Lager 14 und in einem oberen Lager (nicht gezeigt) gelagert.

Im Standrohr 13 verlaufen alle notwendigen Kabel 15 für den Airbag (nicht gezeigt) und die Multifunktionsschalter (nicht gezeigt). Außerdem wird das Standrohr 13 derart aus einer Öffnung im Planetenradgehäuse 12 herausgeführt, dass sich das Planetenradgehäuse 12 derart frei drehen kann (ca. plus/minus 140 Winkelgrade), so dass das Treiberplanetenrad 5 das Standrohr 13 auch in seinen Endstellungen nicht berührt.

Weiter ist die untere Lenkspindel 9 mit dem daran angebrachten Getriebenentellerrad 8 im Planetenradgehäuse 12 mit Lagern 16 und 17 drehbar gelagert. Die untere Lenkspindel 9 endet im Lenkgetriebe (nicht gezeigt).

Das Planetengehäuse 12 ist seinerseits drehbar über Planetenradgehäuselager 18 und 19 in einem Außengehäuse 22 gelagert.

Am Planetenradgehäuse 12 integriert ist ein Schneckenrad 20, in dem eine Schnecke 21 läuft, die wieder von einem Stellmotor (nicht gezeigt) angetrieben wird. Diese Schnecke 21 und der Stellmotor sind in einem Außengehäuse 22 gelagert (nicht gezeigt).

Je nach Geschwindigkeit des Fahrzeugs wird mittels des rechnergesteuerten Stellmotors über die Schnecke 21 und das Schneckenrad 20 das Planetenradgehäuse 12 gedreht. Damit dreht sich auch die Planetenradachse 6 mit den Planetenrädern 5 und 7. Hierdurch entsteht eine Über- oder Untersetzung zwischen der oberen Lenkspindel 1 und der unteren Lenkspindel 9.

Durch die Lagerung des Standrohres 13 für den Airbag (nicht gezeigt) und die Multifunktionsschalter (nicht gezeigt) im Auβengehäuse 22 ist das "Stehen" des Airbags (nicht gezeigt) und der Multifunktionsschalter (nicht gezeigt) gewährleistet.

Die Erfindung ist anhand der Ausführungsbeispiele in der Beschreibung und in den Zeichnungen lediglich exemplarisch dargestellt und nicht darauf beschränkt, sondern umfaßt alle Variationen, Modifikationen, Substitutionen und Kombinationen, die der Fachmann den Ansprüchen entnehmen kann.

### Bezugszeichenliste

- 1: obere Lenkspindel
- 2: unteres Lager
- 3: Lenkspindelgehäuse
- 4: oberes Lenksäulenzahnrad
- 5: Treiberplanetenrad
- 6: Planetenradachse
- 7: Getriebenenplanetenrad
- 8: Getriebenentellerrad
- 9: untere Lenkspindel
- 10: Planetensatzlager
- 11: Planetensatzlager
- 12: Planetenradgehäuse
- 13: Standrohr für Airbag
- 14: unteres Lager
- 15: Kabel
- 16: Lager (untere Lenkspindel)
- 17: Lager (untere Lenkspindel)
- 18: Planetenradgehäuselager
- 19: Planetenradgehäuselager
- 20: Schneckenrad
- 21: Schnecke
- 22: Außengehäuse

## Patentansprüche

1. Lenkung mit einer Airbaganordnung und einer fahrgeschwindigkeitsabhängigen Lenkbetätigungssteuerung mit einer variablen Lenkungsübersetzung, wobei die Lenkbetätigungssteuerung eine veränderbare Übersetzung enthält, die eine schräg gestellte Planetenradachse (6) enthält,
**dadurch gekennzeichnet,**
**dass** die Airbaganordnung einen stehenden Fahrerairbags enthält, der mit der fahrgeschwindigkeitsabhängigen Lenkbetätigungssteuerung mit der variablen Lenkungsübersetzung kombiniert ist, sodass
zwischen den Verzahnungen so viel Raum ist, dass ein Standrohr (13) nach außen geführt wird und der Airbag und Funktionsschalter hierdurch bei Lenkraddrehung stehen bleiben.

2. Lenkung mit einer Airbaganordnung nach Anspruch 1,
**dadurch gekennzeichnet,**
**dass** die Lenkbetätigungssteuerung eine veränderbare Übersetzung enthält, die insbesondere nur vier Zahnräder enthält.

3. Lenkung mit einer Airbaganordnung nach Anspruch 1 oder 2,
**dadurch gekennzeichnet,**
**dass** die Lenksäule mittels eines Planetenradsatzes unterbrochen ist, dessen Achse insbesondere mittels eines Stellmotors geschwindigkeitsabhängig verdreht werden kann und damit eine über- oder Untersetzung der Lenkraddrehung zur Drehung der unteren Gewindespindel (9) zum Lenkgetriebe erzeugt.

4. Lenkung mit einer Airbaganordnung nach Anspruch 3,
**dadurch gekennzeichnet,**
**dass** die Lenksäule mittels eines Planetenradsatzes unterbrochen ist, dessen Achse mittels eines Stellmotors geschwindigkeitsabhängig verdreht werden kann und damit eine Über- oder Untersetzung der Lenkraddrehung zur Drehung der unteren Gewindespindel zum Lenkgetriebe erzeugt.

5. Lenkung mit einer Airbaganordnung nach einem der vorhergehenden Ansprüche,
**dadurch gekennzeichnet,**
**dass** eine Lenksäule mit einer geschwindigkeitsabhängigen Übersetzungsänderung mit stehendem, d.h. sich bei Lenkraddrehung nicht drehenden Fahrerairbag vorgesehen ist.

6. Lenkung mit einer Airbaganordnung nach Anspruch 5,
**dadurch gekennzeichnet,**
**dass** die Lenksäule mit einer geschwindigkeitsabhängigen und computergesteuerten Übersetzungsänderung mit stehendem, d.h. sich bei Lenkraddrehung nicht drehenden Fahrerairbag vorgesehen ist.

7. Lenkung mit einer Airbaganordnung nach Anspruch 5 oder 6,
**dadurch gekennzeichnet,**
**dass** die Lenksäule mit einer geschwindigkeitsabhängigen und computergesteuerten Übersetzungsänderung mit stehendem, d.h. sich bei Lenkraddrehung nicht drehenden Fahrerairbag und dazu stehenden, d.h. sich bei Lenkraddrehung nicht drehenden Multifunktionsschaltern vorgesehen ist.

## Claims

1. Steering mechanism having an airbag arrangement and a travel speed-dependent steering actuating control having a variable steering transmission, wherein the steering actuation control contains a changeable transmission which contains a planetary wheel axis (6) positioned in an inclined manner,
**characterised in that**
the airbag arrangement contains a stationary driver's airbag which can be combined with the travel speed-dependent steering actuation control with the variable steering transmission so that between the tooth systems enough space is provided that a stanchion (13) is guided towards the outside and as a result the airbag and function switch remain stationary when the steering wheel is turned.

2. Steering mechanism having an airbag arrangement as claimed in claim 1, **characterised in that** the steering actuation control contains a changeable transmission which in particular contains only four toothed wheels.

3. Steering mechanism having an airbag arrangement as claimed in claim 1 or 2, **characterised in that** the steering column is interrupted by means of a planetary wheel set, the axle of which can be rotated in particular by means of a servomotor in a speed-dependent manner and therefore produces an increase or reduction of the steering wheel rotation to rotate the lower threaded spindle (9) with respect to the steering gear.

4. Steering mechanism having an airbag arrangement as claimed in claim 3, **characterised in that** the steering column is interrupted by means of a planetary wheel set, whose axle can be rotated by means of a servomotor in a speed-dependent manner and thus produces an increase or decrease of the steering wheel rotation to rotate the lower threaded spindle with respect to the steering gear.

5. Steering mechanism having an airbag arrangement as claimed in any one of the preceding claims, **characterised in that** a steering column having a speed-dependent transmission ratio is provided with a driver's airbag which is stationary, i.e., does not rotate when the steering wheel rotates.

6. Steering mechanism having an airbag arrangement as claimed in claim 5, **characterised in that** the steering column having a speed-dependent and computer-controlled transmission ratio is provided with a driver's airbag which is stationary, i.e. does not rotate when the steering wheel rotates.

7. Steering mechanism having an airbag arrangement as claimed in claim 5 or 6, **characterised in that** the steering column having a speed-dependent and computer-controlled transmission ratio is provided with a driver's airbag which is stationary, i.e. does not rotate when the steering wheel rotates, and with multifunctional switches which are stationary, i.e. do not rotate when the steering wheel rotates, with respect thereto.

## Revendications

1. Direction comprenant un agencement à airbag et une commande d'actionnement de direction fonction de la vitesse avec une démultiplication variable de la direction, dans laquelle la commande d'actionnement de direction contient une démultiplication susceptible d'être modifiée, laquelle contient un axe de roue planétaire (6) disposé en oblique,
**caractérisée en ce que**
l'agencement à airbag contient un airbag de conducteur stationnaire qui est combiné avec la commande d'actionnement de direction fonction de la vitesse avec la démultiplication variable de direction, de telle manière qu'il existe entre les dentures un espace aussi important qu'un tube stationnaire (13) est mené vers l'extérieur, et l'airbag et le commutateur fonctionnel restent de ce fait stationnaires lors d'une rotation du volant.

2. Direction comprenant un agencement à airbag selon la revendication 1,
**caractérisée en ce que** la commande d'actionnement de direction contient une démultiplication susceptible d'être modifiée, qui contient en particulier uniquement quatre engrenages.

3. Direction comprenant un agencement à airbag selon la revendication 1 ou 2,
**caractérisée en ce que** la colonne de direction est interrompue au moyen d'un groupe d'engrenages planétaires, dont l'axe peut être tourné en fonction de la vitesse, en particulier au moyen d'un moteur de positionnement, et engendre ainsi une surmultiplication ou une démultiplication de la rotation du volant pour faire tourner la broche filetée inférieure (9) par rapport au mécanisme de direction.

4. Direction comprenant un agencement à airbag selon la revendication 3,
**caractérisée en ce que** la colonne de direction est interrompue au moyen d'un groupe d'engrenages planétaires, dont l'axe peut être tourné en fonction de la vitesse au moyen d'un moteur de positionnement, et engendre ainsi une surmultiplication ou une démultiplication de la rotation du volant pour faire tourner la broche filetée inférieure par rapport au mécanisme de direction.

5. Direction comprenant un agencement à airbag selon l'une des revendications précédentes,
**caractérisée en ce qu'**il est prévu une colonne de direction avec une variation de démultiplication fonction de la vitesse comprenant un airbag de conducteur stationnaire, c'est-à-dire qui ne tourne pas lors de la rotation du volant.

6. Direction comprenant un agencement à airbag selon la revendication 5,
**caractérisée en ce que** la colonne de direction est dotée d'un système de variation de démultiplication fonction de la vitesse et commandé par ordinateur avec un airbag de conducteur stationnaire, c'est-à-dire qui ne tourne pas lors de la rotation du volant.

7. Direction comprenant un agencement à airbag selon la revendication 5 ou 6,
**caractérisée en ce que** la colonne de direction est dotée d'un système de variation de démultiplication fonction de la vitesse et commandé par ordinateur avec un airbag de conducteur stationnaire, c'est-à-dire qui ne tourne pas lors de la rotation du volant, et des commutateurs multifonctionnels stationnaires par rapport à cet airbag, c'est-à-dire qui ne tournent pas lors de la rotation du volant.
